(19) **Europäisches Patentamt**

**European Patent Office**

**Office européen des brevets**

(11) Veröffentlichungsnummer: **0 314 103**
**A2**

(12) **EUROPÄISCHE PATENTANMELDUNG**

(21) Anmeldenummer: **88117841.2**

(22) Anmeldetag: **26.10.88**

(51) Int. Cl.4: **G01J 3/453 , G05D 13/62**

(30) Priorität: **29.10.87 DE 3736694**

(43) Veröffentlichungstag der Anmeldung:
**03.05.89 Patentblatt 89/18**

(84) Benannte Vertragsstaaten:
**AT BE CH DE ES FR GB GR IT LI LU NL SE**

(71) Anmelder: **Erwin Kayser-Threde Gesellschaft mit beschränkter Haftung**
**Wolfratshauser Strasse 44-48**
**D-8000 München 70(DE)**

(72) Erfinder: **Rippel, Harald, Dr.**
**Diefenbachstrasse 35**
**D-8000 München 71(DE)**

(74) Vertreter: **Hoffmann, Klaus, Dr. rer. nat. et al**
**Hoffmann . Eitle & Partner Patentanwälte**
**Postfach 81 04 20 Arabellastrasse 4**
**D-8000 München 81(DE)**

(54) Verfahren und Vorrichtung zum berührungslosen Antrieb eines Doppelpendel-Interferometers.

㉚ Ein Doppelpendel-Interferometer für die Fourier-Spektroskopie einer unbekannten Meßstrahlung besteht aus einem Strahlteiler (1), einem Doppelpendel (2) mit zwei bewegten Reflektorsystemen (4, 4'), diesen jeweils gegenüberliegenden feststehenden Spiegeln (5, 5'), einer Sammellinse (6) sowie einem Detektorsystem (7). Die Kraftwirkung eines elektromagnetischen Systems (8, 8') versetzt das Doppelpendel (2) in eine Pendelbewegung um seine Drehachse (3). Ein Laser (9) strahlt parallel zur Meßstrahlung in das Interferometer ein. Das zusätzlich zum Interferogramm der eigentlichen Meßstrahlung entstehende Laser-Interferogramm wird auf einen Laser-Detektor (11) geworfen und einer elektronischen Steuerungseinheit (12), welche einen Mikrorechner enthält, zugeführt. Die Frequenz des aus dem Laser-Interferogramm gewonnenen elektrischen Signals ist direkt proportional zur optischen Vorschubgeschwindigkeit der beiden bewegten Reflektorsysteme (4, 4'). Die Steuerungseinheit (12) steuert die Magnetisierungsströme des elektromagnetischen Systems (8, 8') so, daß die optische Vorschubgeschwindigkeit während der Meßphase konstant ist. -Mittels des so geregelten, berührungslosen Antriebs wird die Meßgenauigkeit des Interferometers wesentlich verbessert.

**FIG.1**

## Verfahren und Vorrichtung zum berührungslosen Antrieb eines Doppelpendel-Interferometers

Die Erfindung betrifft ein Verfahren zum berührungslosen Antrieb eines Doppelpendel-Interferometers, dessen zwei bewegliche Reflektorsysteme an einem gemeinsamen starren Doppelpendel befestigt sind, wobei dieses Doppelpendel durch die Kraftwirkung eines elektromagnetischen Systems in eine Pendelbewegung versetzt wird.

Die Erfindung betrifft ferner eine entsprechende Vorrichtung zum berührungslosen Antrieb eines solchen Doppelpendel-Interferometers, das ein elektromagnetisches System aufweist, dessen Kraftwirkung das Doppelpendel in eine Pendelbewegung versetzt.

Der grundsätzliche Aufbau eines Doppelpendel-Interferometers ist aus der DE-PS 30 05 520 derselben Anmelderin bekannt. Es handelt sich dabei um ein Zweistrahl-Interferometer zur Fourier-Spektroskopie, wie es insbesondere zur Strahlungsmessung in Kryostaten an Bord von Raumflugkörpern eingesetzt wird. Die zu untersuchende Meßstrahlung wird mittels eines im Meßstrahlengang angeordneten Strahlteilers in zwei Teilstrahlungen aufgeteilt, die beide nach Durchlaufen zweier optischer Systeme in sich selbst reflektiert und nach neuerlichem Durchgang durch den Strahlteiler, welcher als halbdurchlässiger Spiegel ausgebildet ist, miteinander zur Interferenz gelangen. Das so entstandene Interferogramm wird zur spektroskopischen Auswertung auf einen Detektor geleitet. Die beiden optischen Systeme bestehen jeweils aus einer Kombination eines Retroreflektors mit einem rückreflektierenden feststehenden Spiegel. Die beiden Retroreflektoren sind an den starren Armen eines gemeinsamen Doppelpendels befestigt. Von einem oder mehreren Elektromagneten berührungslos angetrieben, kann das Doppelpendel um seine Gleichgewichtslage innerhalb vorgegebener Toleranzgrenzen nach beiden Seiten hin ausschwingen. Aufgrund des genau bekannten Bewegungsprofils der bewegten Reflektorsysteme ist die Bestimmung des unbekannten Spektrums der in das Interferometer geleiteten Meßstrahlung möglich.

Die Bewegung des Doppelpendels wird in der Praxis so gesteuert, daß bei einer Länge der beiden Pendelarme von beispielsweise 20 cm die daran befestigten Reflektorsysteme eine Wegstrecke von mehreren Zentimetern zurücklegen. Beispielsweise können die Elektromagnete mit Federn versehen sein, die das Doppelpendel an den Umkehrpunkten der Pendelbewegung elastisch abfedern.

Zur genauen spektroskopischen Analyse der in das Interferometer einstrahlenden unbekannten Meßstrahlung ist eine exakte Kenntnis der Vorschubgeschwindigkeit der bewegten Reflektorsysteme - deren sogenannte optische Vorschubgeschwindigkeit - unerläßlich. In der Praxis wird man einen kontinuierlichen Vorschub mit möglichst konstanter Vorschubgeschwindigkeit anstreben. Vorrichtungen und Verfahren zur präzisen Regelung der Vorschubgeschwindigkeit bei Zweistrahl-Interferometern mit auf einer linearen Bahn bewegten Spiegel sind bereits aus der US-PS 4 193 693 und der US-PS 4 575 246 bekannt.

Bei den hier in Rede stehenden Doppelpendel-Interferometern bewegen sich die Reflektorsysteme entlang einer schwach gekrümmten Führungslinie und nicht auf einer geraden, wie bei herkömmlichen Interferometern, bei denen dem bewegten Reflektor, beispielsweise mittels einer Spindel, eine geradlinige Vorschubbewegung entlang ein oder mehrerer Führungsschienen erteilt wird. Die aufgrund der Geometrie der Kreisbewegung unvermeidliche, deutliche Abweichung von der geradlinigen Bewegung wird beim Doppelpendel-Interferometer bewußt in Kauf genommen, da die optische Vorschubgeschwindigkeit an den Enden der beiden Arme des Doppelpendels nur relativ wenig von der an sich gewünschten linearen Bewegung abweicht. Es hat sich nämlich gezeigt, daß die durch die Krümmung der Kreisbahn, auf der sich die Reflektorsysteme bewegen, verursachte Abweichung der realen optischen Vorschubgeschwindigkeit von der realen konstanten Vorschubgeschwindigkeit in der Praxis kleiner ist als die Geschwindigkeitsdifferenzen, die man bei linearem Vorschub des Reflektorsystems auf geradlinigen Führungsschienen normalerweise in Kauf nehmen muß. Sofern geeignete, nämlich gegen räumliches Kippen wie auch gegen Querversatz unempfindliche optische Systeme eingesetzt werden, ist somit eine schwach gekrümmte Führungslinie für die Bahn der Reflektorsysteme funktionell gleichwertig einer geradlinigen Führungslinie.

Die Vorteile des Doppelpendel-Interferometers liegen in der einfachen Pendellagerung mit nur äußerst geringer Lagerreibung, die für die Feldmessung allgemein Vorteile bringt und seinen Einsatz für schnell scannende Messungen hoher Auflösung an Bord von Raumflugkörpern in kryostatischer Umgebung mit vertretbarem Aufwand überhaupt erst möglich macht. Überdies lassen sich Doppelpendel-Interferometer im Vergleich zu herkömmlichen Zweistrahl-Interferometern mit linearem Vorschub des Reflektorsystems kleiner bauen, was insbesondere beim Einsatz in Raumflugkörpern von erheblicher Bedeutung ist.

Obwohl, wie erwähnt, bei Doppelpendel-Interferometern der infolge der Pendelbewegung der Reflektorsysteme gegenüber einer gleichmäßigen geradlinigen Bewegung auftretende Systemfehler sehr klein ist und durch andere Vorteile mehr als aufgewogen wird, liegt es auf der Hand, daß die Qualität der Interferogramme bzw. der daraus abgeleiteten Spektralanalysen weiter erhöht werden könnte, wenn es gelänge, die optische Vorschubgeschwindigkeit der bewegten Reflektorsysteme während der Meßphase tatsächlich vollkommen konstant zu halten. Auch sollte die Weiderholgenauigkeit in der Vorschubgeschwindigkeit über mehrere aufeinanderfolgend aufgenommene Interferogramme extrem hoch sein, so daß auch die Bremsung der Pendelbewegung infolge Lagerreibung trotz des Einsatzes von hochpräzisen Kugellagern bzw. Magnetlagern nicht gänzlich vernachlässigt werden kann.

Aufgabe vorliegender Erfindung ist es somit, ein Verfahren zum berührungslosen Antrieb eines Doppelpendel-Interferometers der in Rede stehenden Art vorzuschlagen, bei dem die geometrisch bedingte Abweichung der optischen Vorschubgeschwindigkeit der bewegten Reflektorsysteme von der idealen linearen Vorschubgeschwindigkeit ebenso ausgeglichen wird wie Störeinflüsse, beispielsweise durch Lagerreibung. Es soll ferner eine entsprechende Antriebsvorrichtung für ein Doppelpendel-Interferometer geschaffen werden.

Bei der Lösung dieser technischen Aufgabe wird ausgegangen von einem Verfahren zum berührungslosen Antrieb eines Doppelpendel-Interferometers, wie eingangs angegeben. Gelöst wird die Aufgabe dadurch, daß ein Laserstrahl in das Interferometer parallel zur Meßstrahlung eingestrahlt wird, daß das im Interferometer entstehende Laser-Interferogramm detektiert und in ein entsprechendes elektrisches Signal umgewandelt wird, daß die Frequenz dieses elektrischen Signals, welche direkt proportional zur optischen Vorschubgeschwindigkeit der Reflektorsysteme ist, mit einer vorgegebenen Sollfrequenz verglichen wird, und dadurch, daß die dem elektromagnetischen System zugeführten Magnetisierungsströme so geregelt werden, daß die optische Vorschubgeschwindigkeit während der Meßphase konstant ist.

Die auf die Angabe einer entsprechenden Vorrichtung gerichtete Aufgabe wird gemäß dem kennzeichnenden Teil des vierten Patentanspruchs gelöst durch einen Hilfslaser, dessen Laserstrahl parallel zur Meßstrahlung in das Interferometer einstrahlt, durch einen Laser-Detektor zum Detektieren des im Interferometer entstehenden Laser-Interferogramms und Umwandlung desselben in ein entsprechendes elektrisches Signal, und durch das Vorsehen einer elektronischen Steuerungseinheit, die die Frequenz des gewonnenen elektrischen Signals mit einer vorgegebenen Sollfrequenz vergleicht und die dem elektromagnetischen System zugeführten Magnetisierungsströme so regelt, daß die optische Vorschubgeschwindigkeit während der Meßphase konstant ist.

Die Erfindung beruht im Kern auf der Erkenntnis, daß die Regelgröße für den berührungslosen Antrieb aus einem Laser-Interferogramm abgeleitet werden kann, sofern der hierzu in das Interferogramm eingestrahlte Laserstrahl genau den gleichen optischen Weg durchläuft wie die eigentliche Meßstrahlung. Das elektrische Signal, das nach Detektion und opto-elektrischer Umwandlung aus dem Laserinterferogramm abgeleitet wird, ist nämlich ein direktes Maß für die momentane optische Vorschubgeschwindigkeit der beiden bewegten Reflektorsysteme, gemäß dem formelmäßigen Zusammenhang

$$f = \nu \cdot V_0 \qquad (1),$$

darin bedeuten:
f       elektr. Signalfrequenz in Hz
$\nu$       optische Laserfrequenz in cm (-1)
$V_0$ optische Vorschubgeschwindigkeit in cm/s.

Aufgrund der direkten Proportionalität zur optischen Vorschubgeschwindigkeit $V_0$ der an dem Doppelpendel befestigten Reflektorsysteme läßt sich die Frequenz f des aus dem Laser-Interferogramm gewonnenen elektrischen Signals als Regelparameter für die Regelung des Antriebs auf eine konstante optische Vorschubgeschwindigkeit verwenden. Es genügt, wenn die Regelung während der Meßphase, also während der tatsächlichen Aufnahmedauer für ein Interferogramms der unbekannten Meßstrahlung, erfolgt. Da die Frequenz des aus dem Laser-Interferogramm gewonnenen elektrischen Signals in jedem Augenblick die tatsächliche optische Vorschubgeschwindigkeit angibt, werden Störeinflüsse infolge von Lagerreibung oder eventuell auftretenden Vibrationen automatisch ebenfalls berücksichtigt und ausgeregelt. Der Einsatz des erfindungsgemäßen Antriebsverfahrens bzw. der entsprechend ausgebildeten Antriebsvorrichtung in einem Doppelpendel-Interferometer gewährleistet eine außerordentlich hohe Konstanz und Wiederholgenauigkeit der optischen Vorschubgeschwindigkeit der bewegten Reflektorsysteme, so daß spektroskopische Analysen unbekannter Meßstrahlung in bis dahin nicht zu realisierender Qualität und Genauigkeit durchgeführt werden können.

In bevorzugter Weiterbildung des erfindungsgemäßen Verfahrens wird der zeitliche Verlauf der optischen Vorschubgeschwindigkeit der Reflektorsysteme während einiger Schwingungsperioden des Doppelpendels im Speicher eines Mikrorechners abgespeichert, wird danach ein Programm berechnet, welches die Stärke der Magnetisierungsströme, die für die kontrollierte Beschleunigung und Abbremsung des Doppelpendels erforderlich sind, zu verschiedenen, fest vorgegebenen Zeitpunkten festgelegt, und wird das elektromagnetsiche System gemäß dem errechneten Programm unabhängig vom tatsächlichen Verlauf der optischen Vorschubgeschwindigkeit angesteuert. Dabei wird davon ausgegangen, daß der zeitliche Verlauf der optischen Vorschubgeschwindigkeit für jede der aufeinanderfolgenden Pendelbewegungen gleich ist und möglicherweise von außen auf das System eingeleitete Störungen wegen der grundsätzlichen Vibrationsunempfindlichkeit des Doppelpendel-Interferometers vernachlässigbar sind. Gemäß dem errechneten Programm wird das schwingende Doppelpendel exakt so stark beschleunigt bzw. abgebremst, wie es zur Kompensation des Geschwindigkeitsverlaufs notwendig ist. Der zeitliche Verlauf der optischen Vorschubgeschwindigkeit wird dem System somit aufgeprägt. - Zur Durchführung dieses Verfahrens ist es erforderlich, daß die Steuerungseinheit der Antriebsvorrichtung einen Mikrorechner enthält, welcher aus dem vom Detektor abgegebenen Signal das Programm zur Ansteuerung des elektromagnetischen Systems errechnet.

Eine Frequenzfilterung des aus dem Laser-Interferogramm gewonnenen elektrischen Signals mittels eines Bandpasses verbessert das Signal-Rausch-Verhältnis, was die Linearität der Vorschubbewegung weiter erhöht.

In zweckmäßiger Weiterbildung der Vorrichtung zum berührungslosen Antrieb des Doppelpendel-Interferometers enthält die Steuerungseinheit einen Frequenz/Spannungs-Umwandler, welcher das vom Detektor abgegebene Frequenzsignal in ein Spannungssignal umwandelt. Das bis dahin analoge Signal kann anschließend von einem Analog/Digital-Wandler in ein Digitalsignal umgewandelt und vom Mikrorechner ausgewertet werden.

Die Steuerungseinheit kann ferner eine oder mehrere Leistungsendstufen enthalten, welche vom Mikrorechner angesteuert werden und die erforderlichen Magnetisierungsströme für das elektromagnetische System liefern.

Bei einer Ausführung der Antriebsvorrichtung umfaßt das elektromagnetische System zwei Elektromagnete, von denen je einer das Doppelpendel in eine der beiden Bewegungsrichtungen aus der Gleichgewichtslage auslenkt.

Bei einer besonders bevorzugten Ausführung weisen die Elektromagnete stromdurchflossene Spulen auf, in die jeweils ein Magnetkern eintaucht. Je nach Anwendungsfall können dabei die Spulen ortsfest und die Magnetkerne mit dem Doppelpendel starr verbunden sein oder umgekehrt, d.h. die Kerne ortsfest und die Spulen mit dem Doppelpendel mitbewegt sein.

Eine Anordnung der Spulen und der dazugehörigen Magnetkerne symmetrisch zu beiden Seiten der Ebene der Drehachse des Doppelpendels hat sich als sehr vorteilhaft erwiesen. Werden die Spulen und die zugehörigen Magnetkerne zudem auf einem Kreisbogen um die Drehachse des Doppelpendels angeordnet, so bleiben die Luftspalte zwischen Spulen und Magnetkerne während der gesamten Pendelbewegung konstant.

Bei einer anderen vorteilhaften Ausführungsform der Erfindung wird das elektromagnetische System gebildet von einem Permanentmagneten, der starr mit dem Doppelpendel verbunden ist, und einer ortsfesten Flachspule, die in einen zur Drehachse rechtwinklig angeordneten Schlitz im Permanentmagneten eintaucht. Bevorzugt ist die Flachspule waagrecht an einer Halterung befestigt. Diese Ausführungsform kommt mit nur einer einzigen stromdurchflossenen Spule aus.

Je nach Polarität des Magnetisierungsstroms stößt sich das Doppelpendel nach der einen oder der anderen Drehrichtung gegen die feststehende Flachspule ab, welche bei Auslenkung seitlich aus dem Schlitz des Permanentmagneten austreten kann. Zweckmäßigerweise sind der Permanentmagnet und die Flachspule symmetrisch zur Drehachse des Doppelpendels angeordnet.

Die Erfindung sowie die ihr zugrundeliegenden physikalischen Zusammenhänge und Erkenntnisse werden nachstehend anhand der beigefügten Zeichnungen und Diagramme erläutert. Es zeigen:

Fig. 1 ein Doppelpendel-Interferometer mit berührungslosem geregeltem Antrieb;

Fig. 2 ein Diagramm zur Erläuterung der geometrischen Verhältnisse beim Schwingen des Doppelpendels des Interferometers von Fig. 1 aus seiner Gleichgewichtslage;

Fig. 3 ein Diagramm, aus dem der zeitliche Verlauf der optischen Vorschubgeschwindigkeit eines Doppelpendel-Interferometers ohne geregelten Antrieb entnehmbar ist;

Fig. 4 ein Diagramm zur Erläuterung des Einflusses der Lagerreibung des Doppelpendels auf den zeitlichen Verlauf der optischen Vorschubgeschwindigkeit;

Fig. 5 die Antriebsvorrichtung des Doppelpendel-Interferometers von Fig. 1, in einem vereinfachten Blockschaltbild;

Fig. 6a, 6b zwei verschiedene Ausführungsbeispiele für das elektromagnetische System, bestehend aus je zwei Spulen und Magnetkernen.

Fig. 7a eine weitere Ausführungsform des elektromagnetischen Systems mit einem Permanentmagneten und einer einzigen Flachspule, in einer Draufsicht;

Fig. 7b das elektromagnetische System von Fig. 7a, in einem Vertikalschnitt entlang der Linie A-A.

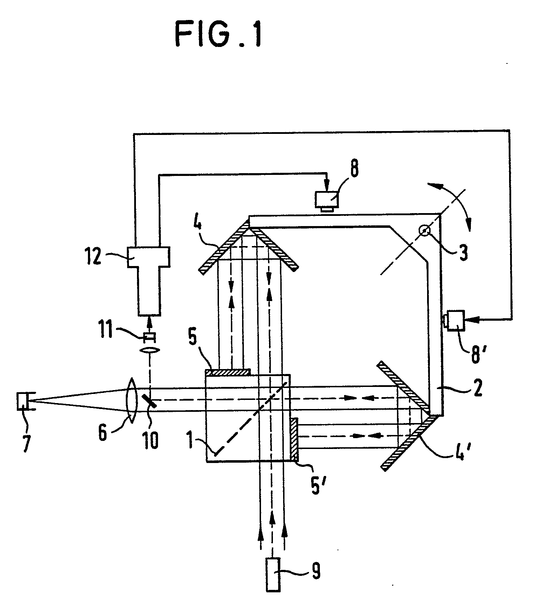

Bei dem in Fig. 1 schematisch dargestellten Doppelpendel-Interferometer zur Fourier-Spektroskopie trifft die zu analysierende Meßstrahlung auf einen Strahlteiler 1 und wird dort in zwei Teilstrahlungen aufgeteilt. An den beiden Armen eines Doppelpendels 2, welches um seine Drehachse 3 frei pendeln kann, sind zwei Reflektorsysteme 4 und 4' befestigt, welche beide als sowohl gegen räumliches Kippen als auch Querversatz unempfindliche Retroreflektoren ausgebildet sind. Den beiden beweglichen Reflektorsystemen 4, 4' steht jeweils ein feststehender Spiegel 5 bzw. 5' gegenüber. Nach Durchlaufen der vollkompensierenden optischen Systeme, jeweils bestehend aus einem bewegten Reflektorsystem 4 bzw.4' und einem zugehörigen feststehenden Spiegel 5 bzw. 5', werden die beiden Teilstrahlungen der Meßstrahlung in sich selbst reflektiert und nach neuerlichem Durchgang durch den halbdurchlässigen Strahlteiler 1 miteinander zur Interferenz gebracht. Das so entstandene Interferogramm wird in einer Sammellinse 6 auf ein Detektorsystem 7 fokussiert. Der Ausgang des Detektorsystems 7 ist mit einer (nicht dargestellten) elektronischen Auswerteinrichtung verbunden, in der das Interferogramm der unbekannten Meßstrahlung spektroskopisch ausgewertet wird. Den beiden Armen des Doppelpendels 2 stehen jeweils ein Elektromagnet 8 bzw. 8' in geringem Abstand gegenüber, deren Kraftwirkung das Doppelpendel 2 in eine Pendelbewegung versetzen, wodurch sich der relative Abstand der mitbewegten Reflektorsysteme 4, 4' zu den jeweils gegenüberliegenden feststehenden Spiegeln 5, 5' sowie zum ebenfalls feststehenen Strahlteiler 1 periodisch schwankt. Die hierdurch verursachte Differenz der von den beiden Teilstrahlen zu durchlaufenden Weglängen führt nach Überlagerung der beiden Teilstrahlungen zur Entstehung eines Interferogramm der in das Interferometer eingestrahlten Meßstrahlung.

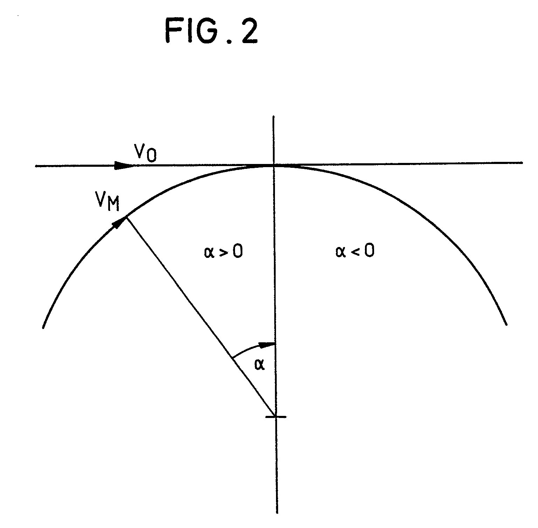

Fig. 2 verdeutlicht den Zusammenhang der mechanischen Vorschubgeschwindigkeit der beiden bewegten Reflektorsysteme 4 und 4', welche sich bei Auslenkung des Doppelpendels 2 um dessen Drehachse 3 um einen Winkel $\alpha$ auf einer Kreisbahn bewegen. Nur in dem Augenblick, in dem das Doppelpendel 2 seine Gleichgewichtslage durchläuft, der Auslenkwinkel $\alpha$ also zu Null wird, haben optische Vorschubgeschwindigkeit $V_O$ und mechanische Vorschubgeschwindigkeit $V_M$ den gleichen Betrag, konstante Winkelgeschwindigkeit des schwingenden Doppelpendels 2 vorausgesetzt. Gemäß der Beziehung

$$V_O = 8\,V_M \cdot \cos \alpha \qquad (2)$$

bleibt die optische Vorschubgeschwindigkeit der Reflektorsysteme 4, 4' umsomehr hinter der mechanischen Vorschubgeschwindigkeit $V_M$ zurück, je weiter sich das Doppelpendel 2 von seiner Ausgangslage entfernt.

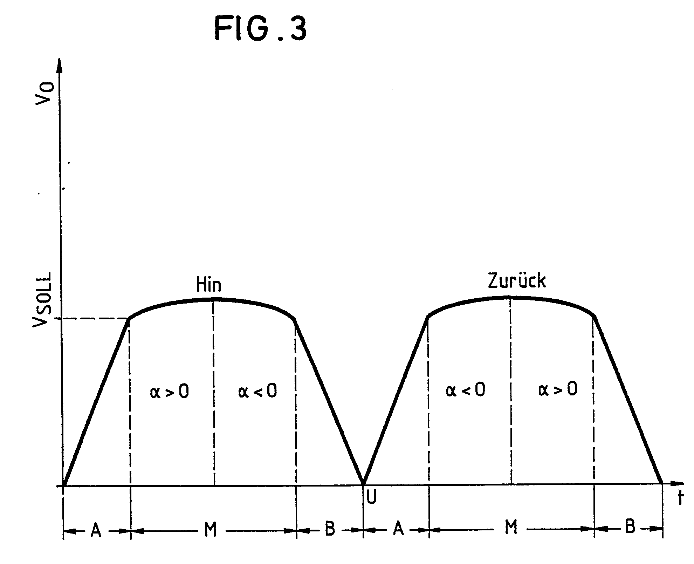

Fig. 3 verdeutlicht den zeitlichen Verlauf der optischen Vorschubgeschwindigkeit über eine vollständige Pendelphase bei einem herkömmlichen Doppelpendel-Interferometer. Infolge der Kraftwirkung beispielsweise des Elektromagneten 8 (vgl. Fig. 1) schwingt das Doppelpendel 2 nach der einen Seite aus, wobei die optische Vorschubgeschwindigkeit während dieser Beschleunigungsphase A stetig zunimmt. Wird nun, nach Erreichen der Sollgeschwindigkeit, der Elektromagnet 8 einfach abgeschaltet, so behält das Doppelpendel 2 seine bis dahin erreichte Winkelgeschwindigkeit bei, was zu einer weiteren Erhöhung der optischen Vorschubgeschwindigkeit der bewegten Reflektorsysteme 4, 4' führt. Beim Durchlaufen der Ausgangslage (Auslenkwinkel $\alpha$ = 0) erreicht die optische Vorschubgeschwindigkeit ihren Maximalwert, d.h. die Abweichung von der optischen Sollgeschwindigkeit ist am größten. Mit zunehmender Auslenkung des Doppelpendels 2 nach der anderen Seite verringert sich die optische Vorschubgeschwindigkeit wieder bis auf die angestrebte Sollgeschwindigkeit. Das Interferogramm der zu analysierenden Meßstrahlung wird bei einem Doppelpendel-Interferometer mit einem derartigen ungeregelten Antrieb während der Phase des freien Schwingens des Doppelpendels 2 - sogenannte Meßphase - aufgenommen. Am Ende der Meßphase M wird das Doppelpendel durch Einschalten des anderen Elektromagneten 8' bis zum Stillstand im Umkehrpunkt U abgebremst, wobei dessen Geschwindigkeit während dieser Bremsphase B linear abnimmt. Während der sich anschließenden zweiten Beschleunigungsphase A wird das Doppelpendel 2 infolge der Kraftwirkung des weiter eingeschalteten Elektromagneten 8' in Gegenrichtung beschleunigt, bis es zu Beginn der zweiten Meßphase M wieder seine Sollgeschwindigkeit erreicht hat.

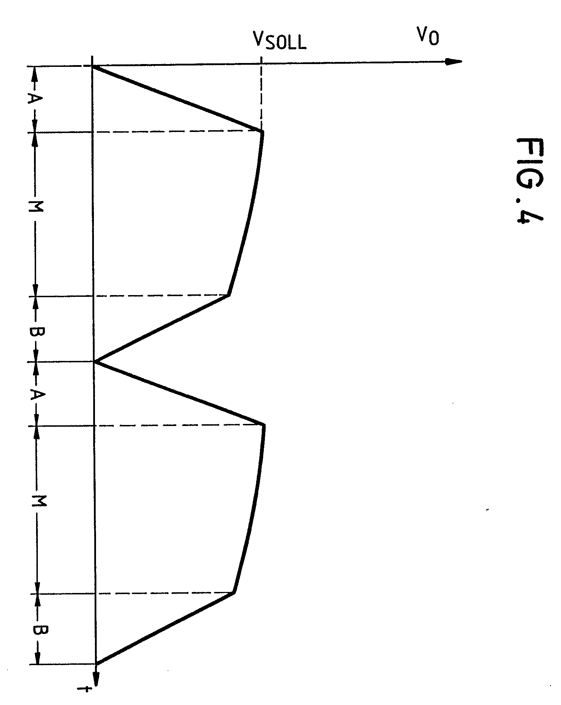

Der eben anhand von Fig. 3 erläuterte zeitliche Verlauf der optischen Vorschubgeschwindigkeit für die beiden bewegten Reflektorsysteme 4, 4' des Zweistrahl-Interferometers wird noch überlagert von dem Einfluß der Lagerreibung des Doppelpendels 2, der im Diagramm von Fig. 4 stark übertrieben dargestellt ist. Nach Erreichen der Sollgeschwindigkeit zu Beginn der Meßphasen M bewirkt Reibung der Drehachse 3 (vgl. Fig. 1) in ihren Lagern eine Abbremsung der Pendelbewegung des Doppelpendels 2, welche der geometrisch bedingten Überhöhung der optischen Vorschubgeschwindigkeit entgegenwirkt. Allerdings ist der Einfluß der Lagerreibung um ein Vielfaches geringer als der zuvor anhand von Fig. 3 beschriebene Effekt der Abweichung der optischen Vorschubgeschwindigkeit von der idealen Sollgeschwindigkeit aufgrund der Kreisbahn-Geometrie.

Zur Regelung des Antriebs des Doppelpendel-Interferometers zwecks Erzielung einer konstanten optischen Vorschubgeschwindigkeit ist nun - gemäß Fig. 1 - ein Laser 9 vorgesehen, dessen Laserstrahl parallel zur Meßstrahlung in das Interferometer einstrahlt. Dieser Laserstrahl durchläuft auf genau dem gleichen optischen Weg wie die zu analysierende Meßstrahlung den Strahlteiler 1, die beiden bewegten Reflektorsysteme 4, 4' und die zugehörigen feststehenden Spiegel 5, 5'. Es entsteht ein Laser-Interferogramm, welches mittels eines kleinen Zusatzspiegels 10 aus dem Strahlengang ausgeblendet und auf einem Laser-Detektor 11 fokussiert wird. Nach Umwandlung des optischen Laser-Interferogramms in ein entsprechendes elektrisches Signal wird letzteres einer elektronischen Steuerungseinheit 12 zugeführt. Ausgangsseitig ist die Steuerungseinheit 12 mit den das Doppelpendel 2 antreibenden Elektromagneten 8, 8' verbunden.

Die Frequenz des aus dem Laser-Interferogramm gewonnenen elektrischen Signals ist, wie oben bereits anhand der Gleichung (1) erläutert, direkt proportional zur optischen Vorschubgeschwindigkeit $V_O$ der Reflektorsysteme 4, 4'. Aufgrund der somit der Steuerungseinheit 12 laufend zugeführten Information über die tatsächliche optische Vorschubgeschwindigkeit regelt die Steuerungseinheit 12 die den beiden Elektromagneten 8, 8' zugeführten Magnetisierungsströme so, daß die sich aus der Kreisbahn-Geometrie und der Lagerreibung ergebenden Abweichungen vollständig kompensiert werden und die optische Vorschubgeschwindigkeit während der Meßphase (vgl. Fig. 3) konstant gehalten wird.

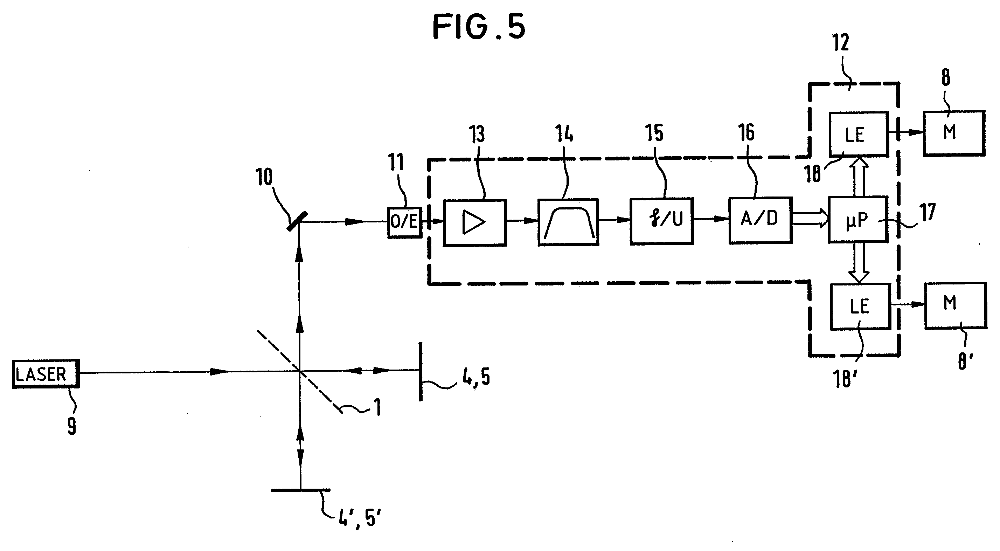

Gemäß dem Blockschaltbild von Fig. 5 enthält die Steuerungseinheit 12 einen Verstärker 13 zur Verstärkung des vom Laserdetektor 11 abgegebenen Interferogramm-Signals. Zur Verbesserung des Rauschabstands ist ein Bandpaß 14 nachgeschaltet. Das elektrische Signal durchläuft anschließend einen Frequenzspannungs -Umwandler 15 sowie einen Analog/Digital-Wandler 16. Kernstück der Steuerungseinheit 12 ist ein Mikrorechner 17, der aus dem vom Laser-Detektor 11 abgegebenen Signal ein Programm zur Ansteuerung der Elektromagnete 8, 8' errechnet. Hierzu wird zunächst der zeitliche Verlauf der optischen Vorschubgeschwindigkeit während einiger Schwingungsperioden des Doppelpendels 2 im Speicher des Mikrorechners 17 abgespeichert und anschließend unter Ausnutzung des formelmäßigen Zusammenhangs zwischen mechanischer Vorschubgeschwindigkeit $V_M$ und optischer Vorschubgeschwindigkeit $V_O$ gemäß obenstehender Gleichung (2) ein Programm für die Stärke der Magnetisierungsströme berechnet, welche für die kontrollierte Beschleunigung und Abbremsung des Doppelpendels 2 erforderlich sind.

Über ebenfalls in der Steuerungseinheit 12 enthaltene Leistungsendstufen 18 und 18' werden die Elektromagnete 8, 8' angesteuert.

Die Frequenz des vom Laser-Detektor 11 abgegebenen Laser-Interferogramms repräsentiert in jedem Zeitpunkt die tatsächliche optische Vorschubgeschwindigkeit der bewegten Reflektorsysteme 4, 4'. Dies ermöglicht dem in der Steuerungseinheit 12 enthaltenen Mikrorechner 17 eine vollständige Kompensierung aller Abweichungen vom gewünschten linearen Verlauf der optischen Vorschubgeschwindigkeit der beiden bewegten Reflektorsysteme 4, 4', unabhängig von deren Ursache. Selbst bei großem optischen Hub oder relativ langsamem Lauf des Doppelpendels 2 lassen sich somit einwandfreie spektroskopische Aufnahmen der zu analysierenden Meßstrahlung durchführen.

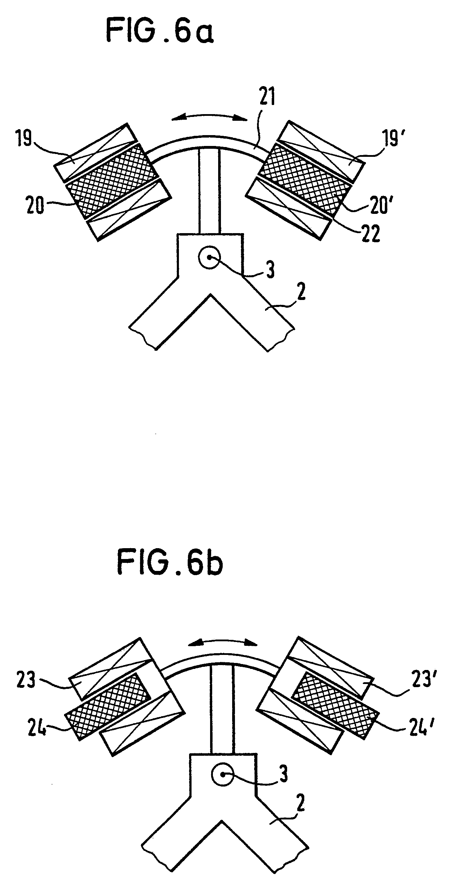

Fig. 6a zeigt eine andere Möglichkeit der Anordnung der Elektromagnete 8, 8' in bezug auf das Doppelpendel 2. Dabei sind die vom Magnetisierungsstrom durchflossenen Spulen 19, 19' und die zugehörigen Magnetkerne 20, 20' symmetrisch zu beiden Seiten der Ebene der Drehachse 3 des Doppelpendels 2 angeordnet. Die Magnetkerne 20, 20' sind an den beiden gegenüberliegenden Enden eines kreisbogenförmig ausgebildeten Trägers 21 befestigt, welcher seinerseits starr mit dem Doppelpendel 2 verbunden ist. Die Spulen 19, 19' sind ortsfest an der (nicht dargestellten) Grundplatte des Interferometers befestigt. Je nach Stärke des Magnetisierungsstroms taucht entweder der Magnetkern 20 oder der gegenüberliegende Magnetkern 20' mehr oder weniger in die Spule 19 bzw. 19' ein. Durch die in den Luftspalten wirkenden Magnetfelder wird das Doppelpendel 2 in die gewünschte Pendelbewegung versetzt. Unabhängig davon, wie weit das Doppelpendel 2 aus seiner Ruhelage ausgelenkt wird, bleiben die Luftspalte 22 zwischen den Spulen 19, 19' und den Magnetkernen 20, 20' konstant.

Fig. 6b zeigt eine Ausführungsform, bei der die Spulen 23, 23' starr mit dem Doppelpendel 2 verbunden sind, während die zugehörigen Magnetkerne 24, 24' ortsfest sind.

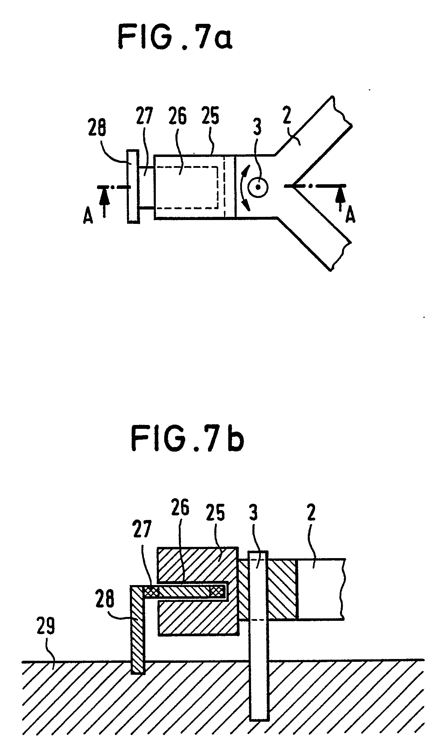

Die in Fig. 7a dargestellte weitere Ausführungsform des elektromagnetischen Systems umfaßt einen Permanentmagneten 25, der starr mit dem freien Ende des Doppelpendels 2 verbunden ist. In diesem Permanentmagneten 25 ist ein waagrechter, nach beiden Seiten hin offener Schlitz 26 vorgesehen, in den eine stromdurchflossene Flachspule 27 eintaucht. Die Flachspule 27 ist ebenfalls waagrecht an einer Halterung 28 befestigt. Fließt ein Magnetisierungsstrom durch die Flachspule 27, so verdreht sich der Permanentmagnet 25 mit dem daran starr befestigten Doppelpendel 2 um die gegenüber der Bodenplatte 29 ortsfeste Drehachse 3 infolge der magnetischen Abstoßung gegenüber der feststehenden Flachspule 27. Bei Umkehrung des Magnetisierungsstroms in der Flachspule 27 wird das Doppelpendel 2 in entgegengesetzter Richtung verdreht.

Der in Fig. 7b dargestellte Vertikalschnitt durch die Ebene der Drehahse 3 (vgl. Fig. 7a) verdeutlicht die waagrechte und zueinander parallele Anordnung von Doppelpendel 2, Permanentmagnet 25 und in dessen Schlitz 26 eintauchender Flachspule 27. Eine Halterung 28 dient zur Verbindung mit einer Bodenplatte 29, welche auch die Drehachse 3 des Doppelpendels 2 trägt.

**Ansprüche**

1. Verfahren zum berührungslosen Antrieb eines Doppelpendel-Interferometers, dessen zwei bewegliche Reflektorsysteme (4, 4′) an einem gemeinsamen starren Doppelpendel (2) befestigt sind,
umfassend den Verfahrensschritt:
- Versetzen des Doppelpendels (2) in eine Pendelbewegung durch die Kraftwirkung eines elektromagnetischen Systems;
**gekennzeichnet** durch die weiteren Verfahrensschritte:
- Einstrahlen eines Laserstrahls in das Interferometer parallel zur Meßstrahlung;
- Detektieren des im Interferometer entstehenden Laser-Interferogramms und Umwandlung in ein entsprechendes elektrisches Signal,
- Vergleichen der Frequenz des elektrischen Signals, welche direkt proportional zur optischen Vorschubgeschwindigkeit der Reflektorsysteme (4, 4′) ist, mit einer vorgegebenen Sollfrequenz;
- Regelung der dem elektromagnetischen System zugeführten Magnetisierungsströme so, daß die optische Vorschubgeschwindigkeit während der Meßphase konstant ist.

2. Verfahren nach Anspruch 1, gekennzeichnet durch die weiteren Verfahrensschritte:
- Abspeicherung des zeitlichen Verlaufs der optischen Vorschubgeschwindigkeit während einiger Schwingungsperioden des Doppelpendels im Speicher eines Mikrorechners (17);
- Berechnung eines Programms, welches die Stärke der Magnetisierungsströme, die für die kontrollierte Beschleunigung und Abbremsung des Doppelpendels erforderlich sind, zu verschiedenen, fest vorgegebenen Zeitpunkten festlegt;
- Ansteuerung des elektromagnetetischen Systems gemäß dem errechneten Programm unabhängig vom tatsächlichen Verlauf der optischen Vorschubgeschwindigkeit.

3. Verfahren nach Anspruch 2, dadurch gekennzeichnet, daß das aus dem Laser-Interferogramm gewonnene elektrische Signal frequenzgefiltert wird.

4. Vorrichtung zum berührungslosen Antrieb eines Doppelpendel-Interferometers, dessen zwei bewegliche Reflektorsysteme (4, 4′) an einem gemeinsamen starren Doppelpendel (2) befestigt sind, mit
- einem elektromagnetischen System, dessen Kraftwirkung das Doppelpendel (2) in eine Pendelbewegung versetzt;
**gekennzeichnet** durch:
- einen Laser (9), dessen Laserstrahl parallel zur Meßstrahlung in das Interferometer einstrahlt;
- einen Laser-Detektor (11) zum Detektieren des im Interferometer entstehenden Laser-Interferogramms und Umwandlung desselben in ein entsprechendes elektrisches Signal;
- eine elektronische Steuerungseinheit (12), die die Frequenz des gewonnenen elektrischen Signals, welche direkt proportional zur optischen Vorschubgeschwindigkit der Reflektorsysteme (4, 4′) ist, mit einer vorgegebenen Sollfrequenz vergleicht und die dem elektromagnetisschen System zugeführten Magnetisierungsströme so regelt, daß die optische Vorschubgeschwindigkeit während der Meßphase konstant ist.

5. Vorrichtung nach Anspruch 4, dadurch gekennzeichnet, daß die Steuerungseinheit (12) einen Mikrorechner (17) enthält, der aus dem vom Laser-Detektor (11) abgegebenen Signal ein Programm zur Ansteuerung des elektromagnetischen Systems errechnet.

6. Vorrichtung nach Anspruch 4 oder 5, dadurch gekennzeichnet, daß die Steuerungseinheit (12) einen Bandpaß (14) zur Frequenzfilterung des vom Laser-Detektor (11) abgegebenen Signal enthält.

7. Vorrichtung nach einem der Ansprüche 4 bis 6, dadurch gekennzeichnet, daß die Steuerungseinheit (12) einen Frequenz/Spannungs-Umwandler (15) enthält.

8. Vorrichtung nach einem der Ansprüche 4 bis 7, dadurch gekennzeichnet daß die Steuerungseinheit (12) einen Analog/Digital-Wandler (16) enthält.

9. Vorrichtung nach einem der Ansprüche 4 bis 8, dadurch gekennzeichnet, daß die Steuerungseinheit (12) wenigstens eine Leistungsendstufe (18, 18′) enthält, welche die Magnetisierungsströme für das elektromagnetische System liefert.

10. Vorrichtung nach einem der Ansprüche 4 bis 9, dadurch gekennzeichnet, daß das elektromagnetische System zwei Elektromagnete (8, 8′) umfaßt, je einer für die beiden Bewegungsrichtungen des Doppelpendels (2).

11. Vorrichtung nach einem der Ansprüche 4 bis 10, dadurch gekennzeichnet, daß das elektromagnetische System stromdurchflossene Spulen (19, 19'; 23, 23') aufweist, in die jeweils ein Magnetkern (20, 20'; 24, 24') eintaucht.

12. Vorrichtung nach Anspruch 11, dadurch gekennzeichnet, daß die Spulen (19, 19') ortsfest sind und die Magnetkerne (20, 20') mit dem Doppelpendel (2) starr verbunden sind.

13. Vorrichtung nach Anspruch 11, dadurch gekennzeichnet, daß die Magnetkerne (24, 24') ortsfest sind und die Spulen (23, 23') mit dem Doppelpendel (2) starr verbunden sind.

14. Vorrichtung nach Anspruch 12 oder 13, dadurch gekennzeichnet, daß die Spulen (19 19'; 23, 23') und die zugehörigen Magnetkerne (20, 20'; 24, 24') symmetrisch zu beiden Seiten der Ebene der Drehachse (3) des Doppelpendels (2) angeordnet sind.

15. Vorrichtung nach Anspruch 14, dadurch gekennzeichnet, daß die Spulen (19, 19'; 23, 23') und die zugehörigen Magnetkerne (20, 20'; 24, 24') auf einem Kreisbogen um die Drehachse (3) des Doppelpendels (2) angeordnet sind.

16. Vorrichtung nach einem der Ansprüche 4 bis 9, dadurch gekennzeichnet, daß das elektromagnetische System gebildet wird von einem Permanentmagneten (25), der starr mit dem Doppelpendel (2) verbunden ist, und einer ortsfesten Flachspule (27), die in einen zur Drehachse (3) rechtwinklig angeordneten Schlitz (26) im Permanentmagneten (25) eintaucht.

17. Vorrichtung nach Anspruch 16, dadurch gekennzeichnet, daß die Flachspule (27) waagrecht an einer Halterung (28) befestigt ist.

18. Vorrichtung nach Anspruch 17, dadurch gekennzeichnet, daß der Permanentmagnet (25) und die Flachspule (27) symmetrisch zur Ebene der Drehachse (3) des Doppelpendels (2) angeordnet sind.

# FIG.1

FIG.2

# FIG.3

FIG.4

# FIG.5

EP 0 314 103 A2

# FIG.6a

# FIG.6b

# FIG.7a

# FIG.7b